(19) Europäisches Patentamt
European Patent Office
Office européen des brevets

(11) **EP 4 723 016 A1**

(12) **EUROPEAN PATENT APPLICATION**

(43) Date of publication:
08.04.2026 Bulletin 2026/15

(21) Application number: 24204316.4

(22) Date of filing: 02.10.2024

(51) International Patent Classification (IPC):
*G06Q 30/0202* (2023.01)    *G06Q 10/04* (2023.01)
*G06Q 40/12* (2023.01)

(52) Cooperative Patent Classification (CPC):
**G06Q 30/0202; G06Q 10/04; G06Q 40/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mastercard International Incorporated
Purchase NY 10577 (US)**

(72) Inventors:
• **PASTORE, Jeremy
Larchmont, 10538 (US)**
• **DUDKINA, Alexandra
13000 Prague (CZ)**

• **RASOVA, Helena
13000 Prague (CZ)**
• **CONNER, Jenna
Cranberry Twp, 16066 (US)**
• **GAMEL, John Gerard
Basking Ridge, 07920 (US)**
• **CAROLUS, Marc
61462 Konigstein (DE)**
• **TANEJA, Nidhi
110058 New Delhi (IN)**
• **KAUR, Simran
110015 New Delhi (IN)**

(74) Representative: **Murgitroyd & Company
165-169 Scotland Street
Glasgow G5 8PL (GB)**

(54) **SYSTEM AND COMPUTER-IMPLEMENTED METHOD FOR GENERATING TOURISM SPEND DATA**

(57) The present disclosure relates to a computer-implemented method (300), comprising: retrieving (302) data from a first dataset, wherein the first dataset comprises cross-border transaction data identifying transactions carried out using one or more payment cards, wherein the first dataset comprises data at a first level of time granularity; retrieving (304) data from a second dataset, wherein the second dataset comprises data identifying a total value of tourism-related transactions within a particular region, wherein the second dataset comprises data at a second level of time granularity that is lower than the first level of time granularity; and generating (306) a third dataset comprising data at the first level of time granularity by adjusting the data from the first dataset using the data from the second dataset.

FIG. 1

EP 4 723 016 A1

**Description**

FIELD

The present disclosure relates to a system and computer-implemented method for generating tourism spend data.

BACKGROUND

Tourism estimates are used by many entities (e.g. government agencies) in order to understand the tourism spend in particular regions or countries, and the regions, countries or corridors from which that tourism spend originates. While estimates of the tourism spend are available, such estimates are typically at low degrees of time granularity (e.g. annual data), and therefore provide no insight into seasonal trends.

Moreover, the low degree of time granularity of the tourism spend estimates means that potential users of the data must wait a long time for the data to be available. For example, for annual data, potential users of the data will need to wait for up to a year (at least) before the data is available.

Accordingly, there exists a need for a system and a computer-implemented method for generating up-to-date tourism spend data at higher degrees of time granularity.

SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method, comprising: retrieving data from a first dataset, wherein the first dataset comprises cross-border transaction data identifying transactions carried out using one or more payment cards, wherein the first dataset comprises data at a first level of time granularity; retrieving data from a second dataset, wherein the second dataset comprises data identifying a total value of tourism-related transactions within a particular region, wherein the second dataset comprises data at a second level of time granularity that is lower than the first level of time granularity; and generating a third dataset comprising data at the first level of time granularity by adjusting the data from the first dataset using the data from the second dataset.

By adjusting the data from the first dataset using the data from the second dataset, the third dataset comprises data at a higher degree of time granularity than the second dataset identifying the total value of tourism-related transactions within a particular region. Specifically, the third dataset identifies the total value of tourism-related transactions within a particular region at a higher degree of time granularity (i.e. the first degree of time granularity).

The first dataset may comprise transaction data identifying transactions carried out using the one or more payment cards over a plurality of one-day periods. The second dataset may comprise data identifying a total value of tourism-related transactions over a one-year period.

Adjusting the data from the first dataset using the data from the second dataset may comprise: generating aggregated data by aggregating the data in the first dataset to the second level of time granularity; determining a plurality of second dataset apportionment factors at the first level of time granularity by dividing records of data in the first dataset by the aggregated data; and multiplying each of the plurality of apportionment factors by the data from the second dataset.

Generating the third dataset comprising data at the first level of time granularity may comprise: adjusting the data from the first dataset using the data from the second dataset to generate a set of initial results; generating a set of scaled values at the first level of time granularity; and multiplying each initial result in the set of initial results by a corresponding scaled value in a set of scaled values.

Generating the set of scaled values at the first level of time granularity may comprise: performing a linear regression using a fourth dataset at a third level of time granularity as a dependent variable of the linear regression, wherein the third level of time granularity is in between the first and second levels of time granularity, wherein the fourth dataset comprises data identifying a total value of tourism-related transactions within a particular region. The linear regression may be carried out using data from the first dataset aggregated to the third level of time granularity as an independent variable. An output of the linear regression may be a coefficient for the aggregated data from the first dataset. Generating the set of scaled values may comprise applying the coefficient to the aggregated data from the first dataset to generate scaled aggregated data from the first dataset at the third level of time granularity.

Generating the set of scaled values at the first level of time granularity may further comprise: aggregating data from the first dataset to the third level of time granularity; calculating a plurality of aggregated data apportionment factors at the first level of time granularity by dividing records of data in the first dataset by the aggregated data; and multiplying each of the plurality of apportionment factors by the scaled aggregated data from the first dataset to generate the set of scaled values at the first level of time granularity.

The set of scaled values at the first level of time granularity may be split by transaction sector.

The method may further comprise generating the set of scaled values at the first level of time granularity split by transaction sector. Generating the set of scaled values at the first level of time granularity split by transaction sector may comprise: aggregating data from the first dataset to the second level of time granularity; splitting the aggregated data at the second level of time granularity by transaction sector to generate by-sector aggregated data at the second level of time granularity; calculating a plurality of transaction sector apportionment factors by dividing, for each transaction sector, the by-sector aggregated data for that transaction sector by the aggregated data at the second level of time granularity; and multiplying each of the transaction sector apportionment factors by the scaled aggregated data at the third level of time granularity to generate scaled by-sector aggregated data at the third level of time granularity.

The second dataset may comprise data identifying a total value of tourism-related transactions within the particular region split by region of origin.

The method may further comprise generating the data identifying a total value of tourism-related transactions within the particular region split by region of origin. Generating the data identifying a total value of tourism-related transactions within the particular region split by region of origin may comprise: calculating ratios of cross-border arrivals to the particular region by region of origin at the second level of time granularity; calculating a spend per account in the particular region by region of origin at the second level of time granularity, wherein the spend per account is calculated using data from the first dataset; multiplying, for each region of origin, the ratio of cross-border arrivals to the particular region for that region of origin by the spend per account in the particular region for that region of origin to generate a joint factor by region of origin; dividing, for each region of origin, the joint factor by region of origin by the sum of all joint factors by region of origin to generate a joint ratio by region of origin; and multiplying, for each region of origin, the joint ratio for that origin country by data identifying a total value of tourism-related transactions within the particular region, to generate data identifying a total value of tourism-related transactions within the particular region split by region of origin.

The spend per account in the particular region by region of origin may be calculated using data from the first dataset. Calculating the spend per account in the particular region by region of origin may comprise: aggregating data from the first dataset to the second level of time granularity; calculating the total cross-border spend by region of origin at the second level of time granularity; calculating the total number of accounts used for transactions by region of origin at the second level of time granularity; and for each region of origin, dividing the total cross-border spend for that region of origin by the total number of accounts used for transactions for that region of origin.

According to a second aspect of the present disclosure, there is provided a computer-readable medium comprising instructions which, when executed by one or more processors of one or more computing devices, cause the one or more computing devices to carry out the method of the first aspect.

BRIEF DESCRIPTION OF FIGURES

Specific embodiments are described below by way of example only and with reference to the accompanying drawings, in which:

FIG. 1 is a schematic diagram of a computing environment comprising a tourism spend data generation system.

FIG. 2 is a schematic diagram of the tourism spend data generation system shown in FIG. 1.

FIG. 3 is a flowchart of a method of generating tourism spend data.

FIG. 4 is a flowchart of a method of generating scaled tourism spend data.

FIG. 5 is a flowchart of a method of generating tourism spend by origin country estimates.

FIG. 6 is a schematic diagram of a computing device configured to implement the methods of the present disclosure.

DETAILED DESCRIPTION

Implementations of the present disclosure are explained below with particular reference to providing, for a particular country, an estimate of tourism spend data by country of residence. It will be appreciated, however, that the implementations described herein are also applicable to providing estimates of tourism spend data for other geographic regions (e.g. continents, regions, provinces, departments, etc.) that are split by other geographic regions of residence (e.g. continents, regions, provinces, departments, etc.).

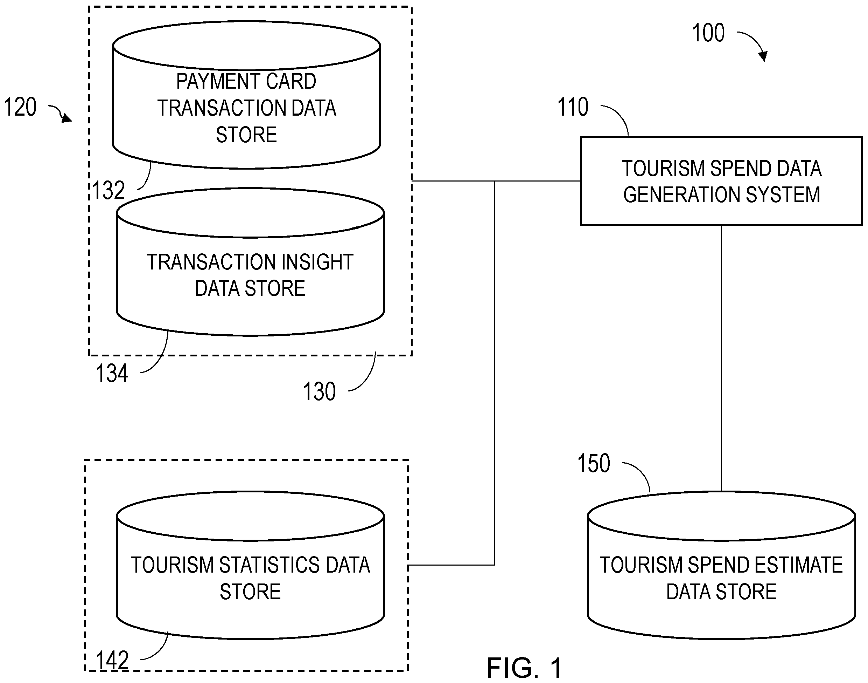

FIG. 1 is a schematic diagram of a computing environment 100 in which tourism spend data is generated. Specifically, a tourism spend data generation system 110 utilises data from a plurality of data sources 120 in order to generate estimates of tourism spend data, and outputs the generated estimates to a tourism spend estimate datastore 150. The plurality of data sources 120 include one or more transaction data stores 130 and one or more tourism statistics data stores 142.

The one or more transaction data stores 130 include a payment card transaction data store 132. The payment card transaction data store 132 stores cross-border transaction data relating to the use of payment cards associated with a payment network (e.g. Mastercard). For each transaction carried out using a payment card, data identifying the location of the transaction, the date of the transaction, the sector (e.g. accommodation, food and drink, retail) associated with the transaction, and the place of residence of the cardholder is available. Therefore, cross-border transaction data can be leveraged to determine, for a particular country, transaction data identifying countries of origin, industries, and dates of transactions in that particular country. The payment card transaction data store 132 therefore stores cross-border transaction data split by country of origin, date, and industry. The payment card transaction data store 132 stores the cross-border transaction data at a high level of granularity (e.g. daily transaction data). In one example, the cross-border transaction data can be extracted from a data store comprising all transaction data for a particular country, by filtering out only the data relating to transactions made by cardholders resident in another country.

It will be appreciated that using the data from the payment card transaction data store 132 alone would not provide accurate estimates of tourism spend in a particular country. This is because the cards associated with the payment network represent a subset of the total number of payment cards used in that country. In addition, the payment card transaction data excludes non-card based transactions (e.g. cash transactions). To account for this, the tourism spend data generation system 110 uses, in determining tourism spend estimates, third-party data relating to annual (and optionally monthly) tourism spend in particular countries. This data is stored in one or more tourism statistics data stores 142.

The one or more tourism statistics data stores 142 store data at a lower level of granularity (e.g. monthly or annual data) than the payment card transaction data store 132. The one or more tourism statistics data stores 142 include a tourism statistics data store 142 storing tourism spend data. The tourism spend data in the tourism statistics data store 142 includes data identifying the annual tourism spend by destination country. In addition, the tourism spend data in the tourism statistics data store 142 may include one or more of: (i) data identifying the annual by-sector tourism spend by destination country (where the sectors are split, for example, into spend related to lodgings, restaurants, clothing, etc.); (ii) data identifying the annual by-origin tourism spend by destination country, which identifies the tourism spend in one or more destination countries, split by country of origin; (iii) data identifying the annual arrivals data to one or more destination countries, split by country of origin; (iv) data identifying the total annual arrivals to the destination country; and (v) data identifying the annual hotel stays in one or more destination countries, split by country of origin. This data may be obtained from third-party organisations such as the United Nations World Tourism Organisation (UNWTO) and/or Oxford Economics. For some destination countries, some of the above optional data may not be available.

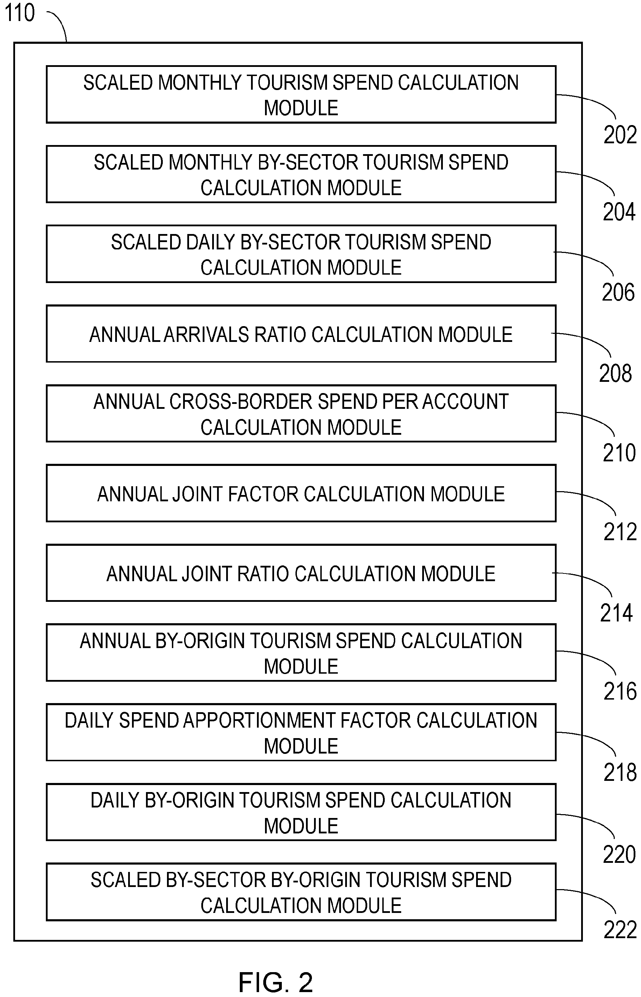

To generate the tourism spend data estimates, the tourism spend data generation system 110 firstly retrieves data from the payment card transaction data store 132 and the tourism statistics data store 142. The tourism spend data generation system 110 then generates the tourism spend data estimates at the level of granularity of the data retrieved from the payment card transaction data store 132, by adjusting data from the payment card transaction data store 132 using data from the tourism statistics data store 142. The tourism spend data generation system 110 stores the generated tourism spend data estimates in the tourism spend estimate data store 150. The process of adjusting the data from the payment card transaction data store 132 is described in more detail with reference to FIG. 2.

FIG. 2 is a schematic diagram of the tourism spend data generation system 110 shown in FIG. 1. The tourism spend data generation system 110 comprises a number of calculation modules 200 that are configured to adjust the data from the payment card transaction data store 132 in order to generate the tourism spend data estimates. Each of these calculation modules 200 is described in further detail below, along with the calculation steps carried out.

The tourism spend data generation system 110 includes a scaled monthly tourism spend calculation module 202 configured to generate an estimate of scaled monthly tourism spend by destination country (also referred to as STS (M, D)). The scaled monthly tourism spend is calculated using a multivariate linear regression. In the linear regression, the dependent variable is monthly tourism spend by destination country (also referred to as TS (M, D)), retrieved from the tourism statistics data store 142. The independent variables include cross-border transaction data by destination country, retrieved from the payment card transaction data store 132, and aggregated to the same level of granularity (i.e. monthly) as the TS (M, D) data. The aggregated monthly by-destination cross-border transaction data is also referred to as XB (M, D). If monthly tourism spend by destination country (TS (M, D) data) is not available for use as the dependent variable, then annual or quarterly tourism spend by destination country data (TS (A, D) or TS (Q, D)) may be used instead. Data from the payment card transaction data store 132 can then be used to calculate monthly seasonality trends.

In addition to using data from the payment card transaction data store 132, the tourism spend data generation system 110 may also use data from other transaction data stores 130. One example of another transaction data store 130 that may be used in generating the annual tourism spend estimates is transaction insight data (e.g. in the form of Mastercard SpendingPulse data) from a transaction insight data store 134. For example, Mastercard SpendingPulse lodging and restaurant data may be used in generating the STS (M, D) data. In this case, the independent variables can also the Mastercard SpendingPulse data (monthly, by destination country), also referred to as SP (M, D). This data includes estimates of overall spending across all forms of payment, by destination country, and can therefore be leveraged to provide estimates of monthly (M) overall spend by destination country (D).

Other independent variables may also be used. Such other independent variables may include, for example, features or transformations of the data from the payment card transaction data store 132 and/or the transaction insight data store 134. One example is a ratio of monthly cross-border transactions to monthly total transactions. Another example is a Boolean variable to indicate whether there was a significant business interruption (e.g. pandemic) in a particular country in a particular month. The independent variables used in the multivariate linear regression by the scaled monthly tourism spend calculation module 202 will vary from country to country, depending on the data sources that are available for that country. For example, if SpendingPulse data is unavailable in a particular country, then the independent variables for that country will not include SpendingPulse data, and may only include data derived from the data stored in the payment card transaction data store 132.

The result of the multivariate linear regression carried out by the scaled monthly tourism spend calculation module 202 is a series of coefficients for each of the independent variables. This series of coefficients can be applied to the independent variables in order to provide reliable estimates of monthly tourism spend, but without needing to wait for publication of the monthly tourism spend data stored in the tourism statistics data store 142 (i.e., the dependent variable).

The scaled monthly tourism spend calculation module 202 therefore applies the coefficients determined for a particular country to the XB (M, D) data (and other data sources, if used, e.g. SP (M, D) data), in order to generate scaled monthly tourism spend estimates (STS (M, D)).

The tourism spend data generation system 110 further includes a scaled monthly by-sector tourism spend calculation module 204. The scaled monthly by-sector tourism spend calculation module 204 is configured to generate scaled monthly (M) tourism spend estimates by destination country (D) and by sector (S), and is also referred to as STS(M, S, D).

To do this, the scaled monthly by-sector tourism spend calculation module 204 multiplies, for each sector (S), the estimate of scaled monthly tourism spend by destination country (STS (M, D)) by a ratio of annual cross-border transaction data for the sector by destination country (XB (A, S, D)) by the sum of annual cross-border transaction data for all sectors by destination country (i.e. sum(XB (A, S, D)), which corresponds to the total annual cross-border transaction data by destination country, XB (A, D)).

That is, the scaled monthly by-sector tourism spend calculation module 204 applies the following calculation, for each sector (S) and destination (D):

$$STS\ (M,\ S,\ D) = STS\ (M,\ D) \times (XB\ (A,\ S,\ D)\ /\ XB\ (A,\ D)) \qquad \text{(Equation 1)}$$

The scaled monthly by-sector tourism spend calculation module 204 optionally calibrates the generated scaled monthly by-sector tourism spend estimates against third-party annual (A) by-sector tourism spend by destination country data (TS (A, S, D)) retrieved from the tourism statistics data store 142. If the STS (M, S, D) data does not correspond to the TS (A, S, D) data (e.g. when aggregating the STS (M, S, D) data to a 12-month period), then the ratios applied to generate the STS (M, S, D) data can be adjusted based on the TS (A, S, D) data. The ratios may be adjusted so that they are more in line with the TS (A, S, D) data, by adjusting the data derived from the transactional data (i.e. the STS (M, S, D) data). For example, if aggregating the STS (M, S, D) data yields an annual value (STS (A, S, D)) that is 25% higher than the TS (A, S, D) data for the same annual period, then the ratios used to calculate the STS (M, S, D) data may be reduced to 80% of their previous values, so that the aggregated STS (M, S, D) data corresponds to the TS (A, S, D) data.

The tourism spend data generation system 110 further includes a scaled daily by-sector tourism spend calculation module 206 configured to generate a scaled daily (d) tourism spend estimates by sector (S) and by destination country (D), also referred to as STS (d, S, D). The scaled daily by-sector tourism spend calculation module 206 generates the STS (d, S, D) data by applying the daily trend data from the cross-border transaction data (XB (d, D)) to the scaled monthly by-sector tourism spend estimates (STS (M, S, D)).

Therefore, for a given month, the scaled daily by-sector tourism spend calculation module 206 generates the STS (d, S, D) data using the following calculation, for each day (d) of a given month (M):

$$STS\ (d,\ S,\ D) = STS\ (M,\ S,\ D) \times XB\ (d,\ D)\ /\ \text{sum}[d]\ (XB\ (d,\ D)) \qquad \text{(Equation 2)}$$

The tourism spend data generation system 110 also includes a number of calculation modules 200 that are configured to use the STS (d, S, D) data to generate estimates of daily (d) by-sector (S) tourism spend, by country of origin (O) for each destination country (D). For some countries, the tourism spend data generation system 110 may have access to third-party annual by-origin tourism spend data (also referred to as TS (A, O, D) data). However, if the TS (A, O, D) is unavailable for a particular country, then the following optional calculation modules 200 of the tourism spend data generation system 110 can be used to generate annual (A) tourism spend estimates by origin country (O).

First, an annual arrivals ratio calculation module 208 is configured to generate a ratio of the annual cross-border arrivals to a destination country, by country of origin (also referred to as AR (A, O, D)). To generate AR (A, O, D), the annual arrivals ratio calculation module 208 obtains, for each origin country, third-party annual arrivals data from that origin country to the destination country (Arr (A, O, D)), along with third-party total annual arrivals to the destination country (Arr (A, D). The annual arrivals ratio calculation module generates AR (A, O, D) by dividing Arr (A, O, D) by Arr (A, D) for each origin country (O), i.e.:

$$AR\ (A,\ O,\ D) = Arr\ (A,\ O,\ D)\ /\ Arr\ (A,\ D) \qquad \text{(Equation 3)}$$

Optionally, the annual arrivals ratio calculation module 208 adjusts the arrivals ratios for each origin country (O) based on third-party annual hotel stay data. Hotel stay data can be used to attempt to account for a split between tourism arrivals and other types of arrivals (such as cross-border shopping day trips, cross-border commuting trips, and other non-tourist activities). In particular, neighbouring countries are assumed to be more biased towards day trips that are less tourist-related when compared to non-neighbouring countries.

Second, an annual cross-border spend per account calculation module 210 is configured to generate an annual spend per account estimate by origin country for each destination country (XB$/n (A, O, D)). To do this, the annual cross-border spend per account calculation module 210 calculates, for each destination country (D), the total annual cross-border spend by origin country (XB$ (A, O, D)) and the total number of accounts used for transactions by origin country (XBn (A, O, D)). XB$ (A, O, D) and XBn (A, O, D) are calculated by the annual cross-border spend per account calculation module 210 using data retrieved from the payment card transaction data store 132 and aggregated to the same annual period as that used by the annual arrivals ratio calculation module 208 to calculate AR (A, O, D). The annual cross-border spend per account module 210 then divides, for each destination country, the total annual cross-border spend from an origin country (XB$ (A, O, D)) by the total number of accounts from that origin country that were used for transactions in the destination country (XBn (A, O, D)), i.e.:

$$XB\$/n\ (A,\ O,\ D) = XB\$\ (A,\ O,\ D)\ /\ XBn\ (A,\ O,\ D) \qquad \text{(Equation 4)}$$

Then, an annual joint factor calculation module 212 is configured to generate, for each destination country, an annual joint factor for each origin country (F (A, O, D)) that accounts for the arrivals ratio and the spend per account. That is, for a particular destination country (D), the annual joint factor module 212 generates the annual joint factor for each origin country (O) by multiplying the ratio of the annual cross-border arrivals to the destination country for a country of origin (AR (A, O, D)) by the estimate of the annual cross-border spend per account in the destination country for that country of origin (XB$/n (A, O, D)):

$$F\ (A,\ O,\ D) = AR\ (A,\ O,\ D)\ x\ XB\$/n\ (A,\ O,\ D) \qquad \text{(Equation 5)}$$

Next, an annual joint ratio calculation module 214 is configured to generate, for each destination country (D), an annual joint ratio for each origin country (R (A, O, D)) by dividing an origin country's annual joint factor (F (A, O, D)) by the sum of the annual joint factors, i.e.:

$$R\ (A,\ O,\ D) = F\ (A,\ O,\ D)\ /\ sum[O]\ (F\ (A,\ O,\ D)) \qquad \text{(Equation 6)}$$

Optionally, the annual joint ratio for each origin country (R (A, O, D)) can be adjusted based on annual tourism spend by origin country data (TS (A, O)) retrieved from the tourism statistics data store 142. Specifically, if the total annual by-origin country tourism spend (i.e., aggregated across all destination countries) does not equal the annual tourism spend for that origin country, then the ratios calculated by the annual joint ratio calculation module 214 can be adjusted accordingly.

Then, an annual by-origin tourism spend calculation module 216 is configured to generate, for each destination country (D), an estimate of the annual by-origin tourism spend for each origin country (O), also referred to as TS (A, O, D). To do this, the annual by-origin tourism spend calculation module 216 applies, for each destination country (D), the annual joint ratio for each origin country (R (A, O, D)) to third-party annual tourism spend by destination country data (TS (A, D)) retrieved from the tourism statistics data store 142, using the following calculation:

$$TS\ (A,\ O,\ D) = R\ (A,\ O,\ D)\ x\ TS\ (A,\ D) \qquad \text{(Equation 7)}$$

As mentioned above, for some destination countries (D), the TS (A, O, D) data may be available from the tourism statistics data store 142. In this case, the calculations carried out by calculation modules 208-216 may not be needed. Alternatively, the data generated by the calculation modules 208-216 can be used to validate the TS (A, O, D) data retrieved from the tourism statistics data store 142. Both the data generated by the calculation modules 208-216 and the TS (A, O, D) data from the tourism statistics data store 142 is an estimate. If there is a difference between the data generated by the calculation modules 208-216 and the TS (A, O, D) data from the tourism statistics data store 142, assumptions can be derived based on additional data that explains those differences.

Once the TS (A, O, D) data has been obtained (i.e. either by calculation, or by retrieval from the tourism statistics data store 142), a daily spend apportionment factor is generated by a daily spend apportionment factor calculation module 218. The daily spend apportionment factor calculation module 218 generates the daily spend apportionment factor from the cross-border transaction data retrieved from the payment card transaction data store 132. To generate the daily spend apportionment factor, the daily spend apportionment factor calculation module 218 aggregates, for each destination country (D), the daily cross-border transaction data for each origin country over the annual time period in the TS (A, O, D) data, to generate an annual cross-border spend by origin country (XB (A, O, D). The daily spend apportionment factor is then generated by calculating each day's proportion of the annual cross-border spend, i.e.:

$$\text{XBAF (d, O, D)} = \text{XB (d, O, D)} / \text{XB (A, O, D)} \qquad \text{(Equation 8)}$$

The tourism spend data generation system 110 includes a daily by-origin tourism spend calculation module 220 that generates, for each destination country (D), a daily by-origin tourism spend estimate (TS (d, O, D)) by multiplying the TS (A, O, D) data by the daily spend apportionment factors for each day (d), i.e.:

$$\text{TS (d, O, D)} = \text{TS (A, O, D)} \times \text{XBAF (d, O, D)} \qquad \text{(Equation 9)}$$

Finally, the tourism spend data generation system 110 includes a scaled by-sector by-origin tourism spend calculation module 222 that applies the daily by-origin tourism spend estimate (TS (d, O, D)) to the scaled daily by-sector tourism spend estimates (STS (d, S, D)), in order to generate, for each destination country (D), scaled daily by-sector by-origin tourism spend estimates (STS (d, S, O, D). The STS (d, S, O, D) data is generated for a particular destination country (D) by using the following calculation, for each origin country (O):

$$\text{STS (d, S, O, D)} = \text{STS (d, S, D)} \times \text{TS (d, O, D)} / \text{sum[O] (TS (d, O, D))} \qquad \text{(Equation 10)}$$

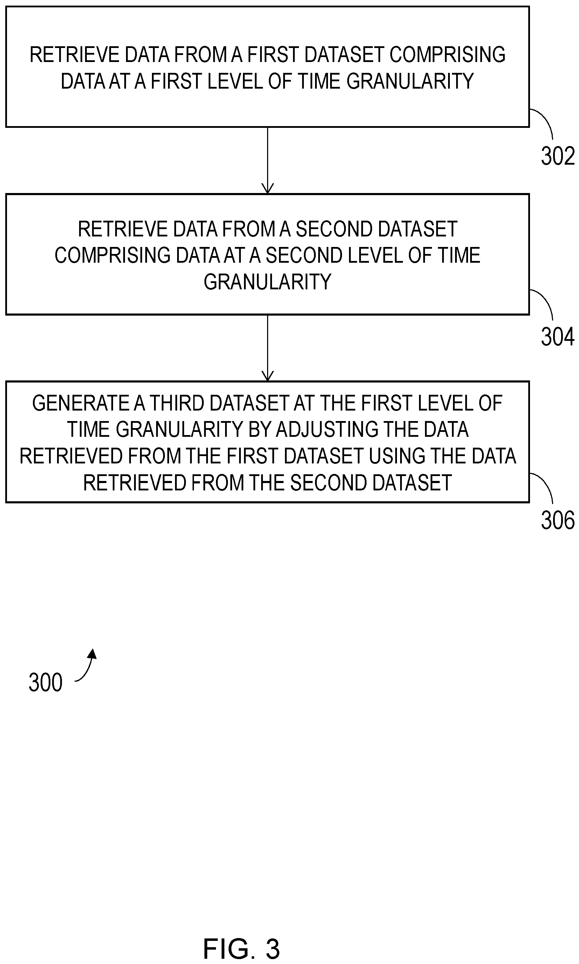

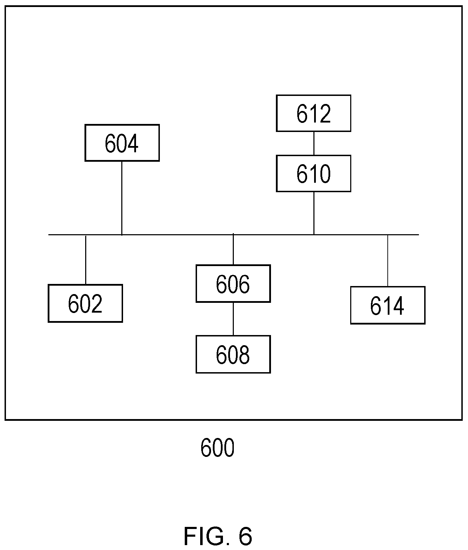

In summary, therefore, the tourism spend data generation system 110 carries out a method 300 shown schematically in FIG. 3. The functionality of the tourism spend data generation system 110 may be provided by one or more computing devices (e.g. the computing apparatus 600 shown in FIG. 6) having one or more processors and a memory. The memory may store instructions that, when executed by the one or more processors, cause the one or more computing devices to carry out the method 300.

At 302, data is retrieved from a first dataset comprising data at a first level of time granularity. The first dataset (e.g. the payment card transaction data store 132) comprises cross-border transaction data identifying transactions carried out using one or more payment cards. The first level of time granularity may be daily data (i.e. transaction data identifying transactions carried out using the one or more payment cards over a plurality of one-day periods).

At 304, data is retrieved from a second dataset comprising data at a second level of time granularity that is lower than the first level of time granularity. The second dataset (e.g. the tourism statistics data store 142) comprises data identifying a total value of tourism-related transactions within a particular region. The second level of time granularity may be annual data (i.e. a total value of tourism-related transactions over a one-year period).

At 306, a third dataset comprising data at the first level of time granularity is generated. The third dataset is generated by adjusting the data retrieved from the first dataset using the data retrieved from the second dataset.

At its most basic level, the third dataset may be generated at 306 by: aggregating the data from the first dataset to the second level of time granularity (e.g., to the same annual period as the data from the second dataset); calculating apportionment factors at the first level of time granularity for each record of data at the first level of time granularity (e.g., each day's cross-border transaction data), by dividing that record by the aggregated data from the first dataset; and multiplying the apportionment factors at the first level of time granularity by the data retrieved from the second dataset. In this way, the trend present in the data at the first level of time granularity is applied to the total data at the second level of time granularity, to generate a third dataset at the first level of time granularity.

As explained above, however, solely using cross-border transaction data from the payment card transaction data store 132 can introduce certain biases into the data. For example, the transaction data accessible to a payment network from a panel of payment cards issued by card issuers that use the payment network suffers from payment card panel bias.

In particular, the data is biased towards the card issuers that use the payment network, which may affect the seasonal trend captured in the cross-border transaction data. In addition, the data is biased towards transactions carried out using payment cards, as it does not capture cash transactions. In addition, cross-border transaction data relating to the use of payment cards in a particular country will not only capture tourism-related spend, but also transactions relating to other activities, such as commuting.

As one specific example, there are a high number of cross-border transactions that take place in Luxembourg (e.g. using payment cards registered in Belgium, France and Germany). However, many people commute to Luxembourg for work, and a proportion of residents in Luxembourg use payment cards from card issuers located in neighbouring countries. Therefore, only a fraction of the cross-border transactions in Luxembourg will be associated with tourism. This will vary from country to country. For example, the percentage of cross-border transactions in Luxembourg using UK-registered payment cards that is associated with tourism-related activity may be higher than the percentage of cross-border transactions in Luxembourg using Germany-registered payment cards that is associated with tourism-related activity, in view of a lower proportion of Luxembourg-based employees commuting from the UK as compared to Germany.

For these reasons, the method 300 may include additional steps to prevent or reduce bias in the third dataset. In particular, step 306 may comprise generating the third dataset by (i) determining an initial tourism spend result by adjusting the data retrieved from the first dataset using the data retrieved from the second dataset; and (ii) adjusting the initial tourism spend result based on scaled tourism spend data at the first level of time granularity. Adjusting the initial tourism spend result based on the scaled tourism spend data reduces bias in the third dataset resulting from use of the cross-border transaction data, as discussed further below.

The scaled tourism spend data may be split by a different variable to the initial tourism spend result. For example, where the first and second datasets may include data for a particular region (e.g., destination country) that is split by region of origin (e.g., origin country), the initial tourism spend result will be split by region of origin, and corresponds to the result of Equation 9 above. The scaled tourism spend data may be split, for example, by sector. Accordingly, by combining the scaled tourism spend data and the initial tourism spend result, the resulting data (i.e. the third dataset) will include data split by both region of origin and another variable (such as sector).

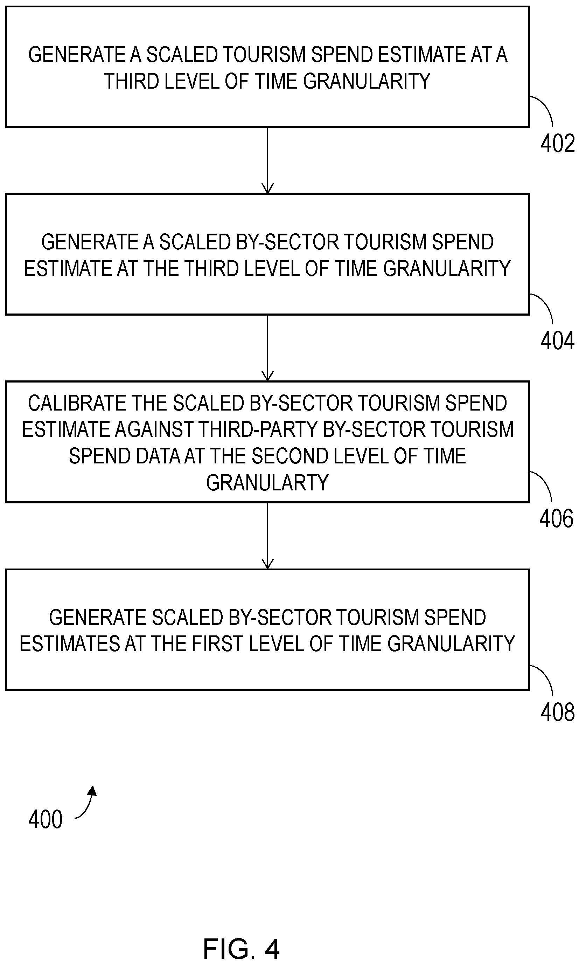

FIG. 4 is a flowchart of a method 400 of generating the scaled tourism spend data at the first level of time granularity. The method 400 may be carried out by the tourism spend data generation system 110. The functionality of the tourism spend data generation system 110 may be provided by one or more computing devices (e.g. the computing apparatus 600 shown in FIG. 6) having one or more processors and a memory. The memory may store instructions that, when executed by the one or more processors, cause the one or more computing devices to carry out the method 400.

At 402, a scaled tourism spend estimate is generated at a third level of time granularity, where the third level of time granularity is in between the first and second levels of time granularity (e.g. monthly data). Using data at the third level of time granularity provides more data points than the data at the second level of time granularity, while also providing seasonal trends. The scaled tourism spend estimate is generated at 402 using a multivariate linear regression, with the dependent variable being tourism spend by destination country at the third level of time granularity, as retrieved from the tourism statistics data store 142. The independent variables include cross-border transaction data by destination country, as retrieved from the payment card transaction data store 132 and aggregated to the third level of time granularity. The independent variables may also include other variables such as transaction insight data from the transaction insight data store 134. The multivariate linear regression results in a coefficient for each of the independent variables. The coefficients can therefore be applied to the cross-border transaction data and any other independent variables used in the multivariate linear regression, to generate scaled tourism spend estimates at the third level of time granularity. The scaling of the cross-border transaction data reduces bias resulting from use of the cross-border transaction data.

At 404, a scaled by-sector tourism spend estimate is generated at the third level of time granularity. Generation of the scaled by-sector tourism spend estimate comprises: (i) retrieving cross-border transaction data from the payment card transaction data store 132; (ii) aggregating the cross-border transaction data to the second level of time granularity (e.g., a one-year period); (iii) splitting the aggregated cross-border transaction data at the second level of time granularity by sector; (iv) dividing the by-sector aggregated cross-border transaction data by the total aggregated cross-border transaction data to generate by-sector ratios derived from the cross-border transaction data; and (v) for each sector, multiplying the scaled tourism spend estimate generated at 402 by the by-sector ratio, to give a scaled by-sector tourism spend estimate at the third level of time granularity (e.g., monthly). This process is summarised in Equation 1 above. Splitting the scaled tourism spend estimate by sector allows an additional layer of information to be provided within the third dataset.

At 406, the scaled by-sector tourism spend estimates are optionally calibrated against third-party by-sector tourism spend by destination country data at the second level of time granularity (if available in the tourism statistics data store 142). This calibration process comprises: (i) retrieving by-sector tourism spend by destination country data at the second level of time granularity (e.g., annual) from the tourism statistics data store 142; (ii) aggregating the scaled by-sector tourism spend estimates generated at 404 to the second level of time granularity; (iii) comparing the aggregated scaled by-sector tourism spend estimates with the by-sector tourism spend by destination country data; (iv) adjusting the by-sector ratios used at 404 if the aggregated scaled by-sector tourism spend estimates do not correspond to the by-sector tourism spend by destination country data; and (v) recalculating the scaled by-sector tourism spend estimates generated at (v) of 404. The calibration process improves the accuracy of the scaled by-sector tourism spend estimates at the third level of time granularity.

At 408, data from the first dataset (i.e., at the first level of time granularity) is used to generate scaled by-sector tourism spend estimates at the first level of time granularity. This process comprises: (i) retrieving cross-border transaction data from the payment transaction data store 132; (ii) aggregating the cross-border transaction data to the third level of time granularity; (iii) calculating ratios at the first level of time granularity by dividing each record of cross-border transaction data at the first level of time granularity by the aggregated cross-border transaction data at the third level of time granularity; and (iv) applying the ratios at the first level of time granularity to the scaled by-sector tourism spend estimates generated at 404 (and optionally calibrated at 406). This process is summarised in Equation 2 above.

Where scaled by-sector tourism spend estimates at the first level of time granularity are generated according to the method 400, step 306 of method 300 may comprise multiplying the scaled by-sector tourism spend estimates at the first level of time granularity by the initial tourism spend result at the first level of time granularity. This provides by-sector information within the third dataset.

The initial tourism result may be split by origin country, as explained above. In this case, for each origin country, the scaled by-sector tourism spend estimate generated at 408 may be multiplied by the initial tourism result for that origin country divided by the aggregated initial tourism results across all origin countries. This process is summarised in Equation 10 above.

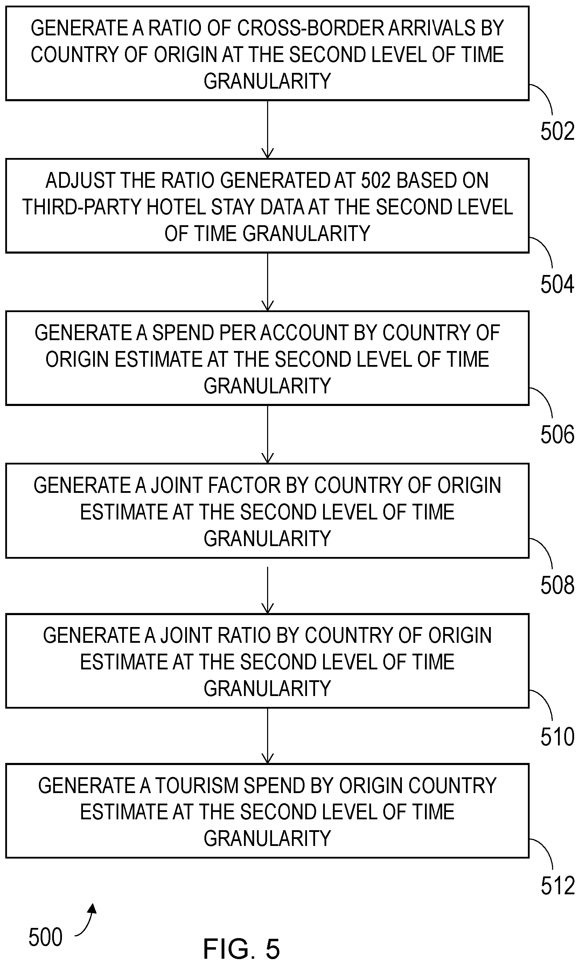

In some cases, tourism spend by origin country data at the second level of time granularity may not be available for a particular destination country (i.e., from the third-party data in the tourism statistics data store 142). In such cases, the tourism spend data generation system 110 may generate tourism spend by origin country estimates according to the method 500 shown schematically in FIG. 5. The functionality of the tourism spend data generation system 110 may be provided by one or more computing devices (e.g. the computing apparatus 600 shown in FIG. 6) having one or more processors and a memory. The memory may store instructions that, when executed by the one or more processors, cause the one or more computing devices to carry out the method 500.

At 502, a ratio of cross-border arrivals by country of origin is generated at the second level of time granularity. This process involves: (i) retrieving third-party arrivals data by origin country for the destination country at the second level of time granularity from the tourism statistics data store 142; (ii) retrieving total arrivals data for the destination country at the second level of time granularity from the tourism statistics data store 142; (iii) for each origin country, dividing the third-party arrivals data by origin country for the destination country at the second level of time granularity by the total arrivals data for the destination country at the second level of time granularity. This process is summarised in Equation 3 above.

At 504, the ratio of cross-border arrivals by country of origin at the second level of time granularity generated at 502 is optionally adjusted based on third-party hotel stay data at the second level of time granularity.

At 506, a spend per account by country of origin estimate is generated at the second level of time granularity. This process involves: (i) retrieving cross-border transaction data at the first level of time granularity from the payment card transaction data store 132; (ii) aggregating the cross-border transaction data to the second level of time granularity (i.e., to the time period used at 502); (iii) calculating the total cross-border spend by origin country at the second level of time granularity; (iv) calculating the total number of accounts used for transactions by origin country at the second level of time granularity; and (v) dividing the result of the calculation at (iii) by the result of the calculation at (iv). This process is summarised in Equation 4 above.

At 508, a joint factor by country of origin estimate is generated at the second level of time granularity. This process involves, for each country of origin, multiplying the ratio of cross-border arrivals by country of origin generated at 502 by the spend per account by country of origin estimate generated at 506, and is summarised in Equation 5 above.

At 510, a joint ratio by country of origin estimate is generated at the second level of time granularity. This process involves, for each country of origin, dividing the joint factor by country of origin estimate generated at 508 by the sum of all joint factors generated at 508 (i.e. for all countries of origin), and is summarised in Equation 6 above.

At 512, a tourism spend by origin country estimate is generated at the second level of time granularity. This process involves: (i) retrieving third-party total tourism spend data for the destination country at the second level of time granularity from the tourism statistics data store 142; and (ii) for each origin country, multiplying the retrieved total tourism spend data by the joint ratio for that country of origin generated at 510. This process is summarised in Equation 7 above.

Where tourism spend by origin country data at the second level of time granularity is available for a particular destination country, the method 500 may be carried out by the tourism spend data generation system 110, in order to validate the tourism spend by origin country data at the second level of time granularity.

FIG. 6 is a schematic and simplified representation of a computer apparatus 600 which can be used to perform the methods described herein, either alone, in combination with other computer apparatuses or as part of a "cloud" computing arrangement. In particular, the computer apparatus 600 may be configured to perform the steps of the methods 300, 400 and/or 500 described above that are carried out by the tourism spend data generation system 110, in order to implement the functionality of the tourism spend data generation system 110 described above.

The computer apparatus 600 comprises various data processing resources such as a processor 602 (in particular a hardware processor) coupled to a central bus structure. Also connected to the bus structure are further data processing resources such as memory 604. A display adapter 606 connects a display device 608 to the bus structure. One or more user-input device adapters 610 connect a user-input device 612, such as a keyboard and/or a mouse to the bus structure. One or more communications adapters 614 are also connected to the bus structure to provide connections to other computer systems 600 and other networks.

In operation, the processor 602 of computer system 600 executes a computer program comprising computer-executable instructions that may be stored in memory 604. When executed, the computer-executable instructions may cause the computer system 600 to perform one or more of the methods described herein, such as any of the methods 300, 400 or 500 described above. The results of the processing performed may be displayed to a user via the display adapter 606 and display device 608. User inputs for controlling the operation of the computer system 600 may be received via the user-input device adapters 610 from the user-input devices 612.

It will be apparent that some features of computer system 600 shown in FIG. 6 may be absent in certain cases. For example, one or more of the plurality of computer apparatuses 600 may have no need for display adapter 606 or display device 608. This may be the case, for example, for particular server-side computer apparatuses 600 which are used only for their processing capabilities and do not need to display information to users. Similarly, user input device adapter 610 and user input device 612 may not be required. In its simplest form, computer apparatus 600 comprises processor 602 and memory 604. In addition, it will be appreciated that the methods may be implemented by multiple computing apparatuses 600 (e.g. in a distributed computing environment).

Variations or modifications to the systems and methods described herein are set out in the following paragraphs.

Although the examples described above use a first level of time granularity of daily data, a second level of time granularity of annual data and a third level of time granularity of monthly data, it will be appreciated that the methods described above are also applicable to other levels of time granularity. In addition, although the above methods are described with reference to generating data for a particular destination country split by origin country, different geographical regions (both destinations and origins) such as states, departments, travel corridors, etc. may be used.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

**Claims**

1.  A computer-implemented method, comprising:

    retrieving data from a first dataset, wherein the first dataset comprises cross-border transaction data identifying transactions carried out using one or more payment cards, wherein the first dataset comprises data at a first level of time granularity;
    retrieving data from a second dataset, wherein the second dataset comprises data identifying a total value of tourism-related transactions within a particular region, wherein the second dataset comprises data at a second level of time granularity that is lower than the first level of time granularity; and
    generating a third dataset comprising data at the first level of time granularity by adjusting the data from the first dataset using the data from the second dataset.

2.  The computer-implemented method of claim 1, wherein the first dataset comprises transaction data identifying transactions carried out using the one or more payment cards over a plurality of one-day periods.

3.  The computer-implemented method of claim 1 or claim 2, wherein the second dataset comprises data identifying a total value of tourism-related transactions over a one-year period.

4.  The computer-implemented method of any of claims 1 to 3, wherein adjusting the data from the first dataset using the data from the second dataset comprises:

    generating aggregated data by aggregating the data in the first dataset to the second level of time granularity;
    determining a plurality of second dataset apportionment factors at the first level of time granularity by dividing records of data in the first dataset by the aggregated data; and
    multiplying each of the plurality of apportionment factors by the data from the second dataset.

5.  The computer-implemented method of any of claims 1 to 4, wherein generating the third dataset comprising data at the first level of time granularity comprises:

    adjusting the data from the first dataset using the data from the second dataset to generate a set of initial results;
    generating a set of scaled values at the first level of time granularity; and
    multiplying each initial result in the set of initial results by a corresponding scaled value in a set of scaled values.

6.  The computer-implemented method of claim 5, wherein generating the set of scaled values at the first level of time granularity comprises:

    performing a linear regression using a fourth dataset at a third level of time granularity as a dependent variable of the linear regression, wherein the third level of time granularity is in between the first and second levels of time granularity, wherein the fourth dataset comprises data identifying a total value of tourism-related transactions within a particular region;
    wherein the linear regression is carried out using data from the first dataset aggregated to the third level of time granularity as an independent variable;
    wherein an output of the linear regression is a coefficient for the aggregated data from the first dataset; and
    wherein generating the set of scaled values comprises applying the coefficient to the aggregated data from the first dataset to generate scaled aggregated data from the first dataset at the third level of time granularity.

7.  The computer-implemented method of claim 6, wherein generating the set of scaled values at the first level of time granularity further comprises:

    aggregating data from the first dataset to the third level of time granularity;
    calculating a plurality of aggregated data apportionment factors at the first level of time granularity by dividing records of data in the first dataset by the aggregated data; and
    multiplying each of the plurality of apportionment factors by the scaled aggregated data from the first dataset to generate the set of scaled values at the first level of time granularity.

8.  The computer-implemented method of claim 6 or claim 7, wherein the set of scaled values at the first level of time granularity is split by transaction sector.

9.  The computer-implemented method of claim 8, further comprising generating the set of scaled values at the first level of time granularity split by transaction sector, wherein the generating comprises:

    aggregating data from the first dataset to the second level of time granularity;
    splitting the aggregated data at the second level of time granularity by transaction sector to generate by-sector aggregated data at the second level of time granularity;
    calculating a plurality of transaction sector apportionment factors by dividing, for each transaction sector, the by-sector aggregated data for that transaction sector by the aggregated data at the second level of time granularity; and
    multiplying each of the transaction sector apportionment factors by the scaled aggregated data at the third level of time granularity to generate scaled by-sector aggregated data at the third level of time granularity.

10. The computer-implemented method of any of claims 1 to 9, wherein the second dataset comprises data identifying a total value of tourism-related transactions within the particular region split by region of origin.

11. The computer-implemented method of claim 10, wherein the method further comprises generating the data identifying a total value of tourism-related transactions within the particular region split by region of origin, wherein the generating comprises:

calculating ratios of cross-border arrivals to the particular region by region of origin at the second level of time granularity;

calculating a spend per account in the particular region by region of origin at the second level of time granularity, wherein the spend per account is calculated using data from the first dataset;

multiplying, for each region of origin, the ratio of cross-border arrivals to the particular region for that region of origin by the spend per account in the particular region for that region of origin to generate a joint factor by region of origin;

dividing, for each region of origin, the joint factor by region of origin by the sum of all joint factors by region of origin to generate a joint ratio by region of origin; and

multiplying, for each region of origin, the joint ratio for that origin country by data identifying a total value of tourism-related transactions within the particular region, to generate data identifying a total value of tourism-related transactions within the particular region split by region of origin.

12. The computer-implemented method of claim 11, wherein the spend per account in the particular region by region of origin is calculated using data from the first dataset.

13. The computer-implemented method of claim 12, wherein calculating the spend per account in the particular region by region of origin comprises:

aggregating data from the first dataset to the second level of time granularity;

calculating the total cross-border spend by region of origin at the second level of time granularity;

calculating the total number of accounts used for transactions by region of origin at the second level of time granularity; and

for each region of origin, dividing the total cross-border spend for that region of origin by the total number of accounts used for transactions for that region of origin.

14. A computer-readable medium comprising instructions which, when executed by one or more processors of one or more computing devices, cause the one or more computing devices to carry out the method of any of claims 1 to 13.

FIG. 1

110

| |
|---|
| SCALED MONTHLY TOURISM SPEND CALCULATION MODULE |

202

| |
|---|
| SCALED MONTHLY BY-SECTOR TOURISM SPEND CALCULATION MODULE |

204

| |
|---|
| SCALED DAILY BY-SECTOR TOURISM SPEND CALCULATION MODULE |

206

| |
|---|
| ANNUAL ARRIVALS RATIO CALCULATION MODULE |

208

| |
|---|
| ANNUAL CROSS-BORDER SPEND PER ACCOUNT CALCULATION MODULE |

210

| |
|---|
| ANNUAL JOINT FACTOR CALCULATION MODULE |

212

| |
|---|
| ANNUAL JOINT RATIO CALCULATION MODULE |

214

| |
|---|
| ANNUAL BY-ORIGIN TOURISM SPEND CALCULATION MODULE |

216

| |
|---|
| DAILY SPEND APPORTIONMENT FACTOR CALCULATION MODULE |

218

| |
|---|
| DAILY BY-ORIGIN TOURISM SPEND CALCULATION MODULE |

220

| |
|---|
| SCALED BY-SECTOR BY-ORIGIN TOURISM SPEND CALCULATION MODULE |

222

# FIG. 2

RETRIEVE DATA FROM A FIRST DATASET COMPRISING DATA AT A FIRST LEVEL OF TIME GRANULARITY

302

RETRIEVE DATA FROM A SECOND DATASET COMPRISING DATA AT A SECOND LEVEL OF TIME GRANULARITY

304

GENERATE A THIRD DATASET AT THE FIRST LEVEL OF TIME GRANULARITY BY ADJUSTING THE DATA RETRIEVED FROM THE FIRST DATASET USING THE DATA RETRIEVED FROM THE SECOND DATASET

306

300

FIG. 3

```
┌─────────────────────────────────────────────────────┐
│                                                       │
│   GENERATE A SCALED TOURISM SPEND ESTIMATE AT A      │
│        THIRD LEVEL OF TIME GRANULARITY                │
│                                                       │
└─────────────────────────────────────────────────────┘
                                                    402
                         │
                         ▼
┌─────────────────────────────────────────────────────┐
│                                                       │
│   GENERATE A SCALED BY-SECTOR TOURISM SPEND          │
│   ESTIMATE AT THE THIRD LEVEL OF TIME GRANULARITY     │
│                                                       │
└─────────────────────────────────────────────────────┘
                                                    404
                         │
                         ▼
┌─────────────────────────────────────────────────────┐
│   CALIBRATE THE SCALED BY-SECTOR TOURISM SPEND       │
│   ESTIMATE AGAINST THIRD-PARTY BY-SECTOR TOURISM     │
│   SPEND DATA AT THE SECOND LEVEL OF TIME             │
│                GRANULARTY                             │
└─────────────────────────────────────────────────────┘
                                                    406
                         │
                         ▼
┌─────────────────────────────────────────────────────┐
│                                                       │
│   GENERATE SCALED BY-SECTOR TOURISM SPEND            │
│   ESTIMATES AT THE FIRST LEVEL OF TIME GRANULARITY   │
│                                                       │
└─────────────────────────────────────────────────────┘
                                                    408
```

400

FIG. 4

GENERATE A RATIO OF CROSS-BORDER ARRIVALS BY COUNTRY OF ORIGIN AT THE SECOND LEVEL OF TIME GRANULARITY

502

ADJUST THE RATIO GENERATED AT 502 BASED ON THIRD-PARTY HOTEL STAY DATA AT THE SECOND LEVEL OF TIME GRANULARITY

504

GENERATE A SPEND PER ACCOUNT BY COUNTRY OF ORIGIN ESTIMATE AT THE SECOND LEVEL OF TIME GRANULARITY

506

GENERATE A JOINT FACTOR BY COUNTRY OF ORIGIN ESTIMATE AT THE SECOND LEVEL OF TIME GRANULARITY

508

GENERATE A JOINT RATIO BY COUNTRY OF ORIGIN ESTIMATE AT THE SECOND LEVEL OF TIME GRANULARITY

510

GENERATE A TOURISM SPEND BY ORIGIN COUNTRY ESTIMATE AT THE SECOND LEVEL OF TIME GRANULARITY

512

500

FIG. 5

600

FIG. 6

Europäisches
Patentamt

European
Patent Office

Office européen
des brevets

# EUROPEAN SEARCH REPORT

**Application Number**

EP 24 20 4316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/308112 A1 (PRENTICE JASON SETH [US] ET AL) 25 October 2018 (2018-10-25) * figures 1-5C * * paragraphs [0002] - [0013], [0023] - [0108] * ----- | 1-14 | INV. G06Q30/0202 G06Q10/04 G06Q40/12 |
| A | US 2016/189312 A1 (LEE EDWARD M [US] ET AL) 30 June 2016 (2016-06-30) * the whole document * ----- | 1-14 | |

**TECHNICAL FIELDS SEARCHED (IPC)**

G06Q

The present search report has been drawn up for all claims

| Place of search | Date of completion of the search | Examiner |
|---|---|---|
| The Hague | 12 February 2025 | Meijs, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4316

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | Publication date |
|---|---|---|---|
| US 2018308112 A1 | 25-10-2018 | CN 110832514 A<br>US 2018308112 A1<br>WO 2018195553 A1 | 21-02-2020<br>25-10-2018<br>25-10-2018 |
| US 2016189312 A1 | 30-06-2016 | NONE | |

EPO FORM P0459

For more details about this annex : see Official Journal of the European Patent Office, No. 12/82